# EUROPEAN PATENT SPECIFICATION

(11) **EP 2 123 486 B1**
(45) Date of publication and mention of the grant of the patent: **20.07.2016**
(21) Application number: 07850657.3
(22) Date of filing: 14.12.2007
(51) Int. Cl.: B60C 11/03, B60C 11/13

(54) **PNEUMATIC TIRE**
LUFTREIFEN
PNEUMATIQUE

(30) Priority: 20.12.2006 JP 2006342646; 22.01.2007 JP 2007011880
(43) Date of publication of application: 25.11.2009
(73) Proprietor: Bridgestone Corporation, Tokyo 104-8340 (JP)
(72) Inventor: OCHI, Naoya, Kodaira-shi Tokyo 187-8531 (JP)
(74) Representative: Oxley, Robin John George
(86) International application number: PCT/JP2007/074153
(87) International publication number: WO 2008/075630

(56) References cited:
- EP-A2- 1 106 395
- EP-A2- 1 120 295
- WO-A1-00/51831
- JP-A- 62 181 904
- JP-A- 2001 071 709
- JP-A- 2001 071 709
- JP-A- 2001 225 611
- JP-A- 2001 225 611
- JP-A- 2003 326 920
- JP-A- 2003 326 920
- JP-A- 2006 076 349

## Description

### Technical Field

The present invention relates to a pneumatic tire, in particular, to a pneumatic tire which is excellent in drainage properties, driving stability and resistance to uneven wear and capable of reducing noise, whereby the tire properties have been improved with good balance therebetween.

### Prior Art

In a pneumatic tire where a tread portion thereof is provided with a circumferential groove extending along the tire circumferential direction and a slant groove extending with inclination with respect to the tire circumferential direction, drainage in the fore-rear direction of the tire and drainage toward the tire side portions can be effected by the circumferential groove and the slant groove, respectively.

In such a tire as described above, each slant groove generally opens to the circumferential groove in the tread center region in order to enhance drainage properties, whereby there arises a problem that rigidity of land portions at acute-angle portions thereof interposed between each slant groove and the circumferential groove is reduced, causing deterioration of driving stability and probable occurrence of uneven wear.

In such a tire as described above, in a case where the slant groove extends to be inclined at a relatively large angle with respect to the tire circumferential direction, there arises another problem that, although driving stability and resistance to uneven wear are improved due to the ensured rigidity of the land portions, pattern noises and drainage properties deteriorate.
In order to improve drainage properties, it is effective to decrease the angle at which the slant groove extends with respect to the tire circumferential direction and/or make the groove width wider to increase a percentage of grooves in the tire contact ground (a negative rate). However, in this case, similar to the aforementioned first case, there arises a problem that deterioration in driving stability and uneven wear are more likely to occur due to deterioration in rigidity of the land portions.

As a technique in which a circumferential groove and slant grooves are provided in a tread portion in order to improve both drainage properties and driving stability, JP-A 09-002025, for example, discloses a directional tread pattern where a pair of circumferential grooves are provided in a tread portion to define a circumferential rib and a number of slant main grooves are provided to open to the circumferential grooves, wherein the slant main grooves, in the extending form thereof, include steep slant portions as the pattern center side portion and a gentle slant portions as the tread end side portions and each acute-angle portion interposed between the circumferential groove and the slant main groove is chamfered toward the tip end portion thereof According to the tire described above, good drainage properties and good driving stability are obtained. However, as a result of a further study by the inventors of the present invention, it has turned out that, since the sides of each acute-angle portion are interposed by the circumferential groove and the slant main groove as space, there arises a problem, when a lateral force is exerted thereon, in particular, that the rigidity of the land portions for suppressing deformation of the blocks tends to be insufficient.

Further, JP-A 2006-076349 discloses a tire in which no center main groove is provided in a tread portion and a number of slant grooves open to side main grooves, wherein each slant groove is provided with a groove-bottom-up region where the groove depth of the slant groove is decreased toward the pattern center such that the inclined portion of the groove-bottom-up region terminates at the tread center region.
The tire disclosed by JP-A 2006-076349, although it is excellent in driving stability, has neither center main groove nor a structure in which the slant grooves open to the center main groove, whereby satisfactory drainage properties are not obtained and thus JP-A 2006-076349 still need be improved. EP1106395 discloses a tire according to the preamble of claim 1 designed to reduce demolding defects.

### Disclosure of the Invention

An object of the present invention is to provide a pneumatic tire employing a tread pattern having a tread portion provided with a center main groove and a slant groove, characterized in that in the tread pattern the structure at each acute-angle portion of a center land portion is optimized so that drainage properties are improved and noises are reduced, with maintaining good performances in driving stability, resistance to uneven wear, ride comfort and the like.

### Means for solving the Problems

To achieve the object described above, the present invention provides main structures as described below.
In a first aspect of the present invention, a pneumatic tire having in each half-section obtained by dividing a tread portion into two by the pattern center: a center main groove located at the pattern center or in the vicinity thereof and extending along the tire circumferential direction; at least one side main groove located between the center main groove and the tread end and extending in the tire circumferential direction; and a plurality of steep grooves located between the center main groove and the side main groove and extending at a relatively small angle with respect to the tire circumferential direction, wherein a center land portion is defined by the center main groove and a first side main groove as the side main groove adjacent to the center main groove, and the center land portion is demarcated into a number of substantial blocks by the center main groove, the first side main groove and the two steep grooves adjacent in the tire circumferential direction to form a block row;
the steep groove is provided with an inclined groove bottom portion where the groove depth gradually increases from the center main groove toward the first side main groove;
a first acute-angle portion interposed by the center main groove and each steep groove is provided with a first chamfered portion where the height of the land portion gradually decreases toward a tip end thereof; and
the inclined groove bottom portion and the first chamfered portion are located adjacent to each other in the tire width direction, and characterized in that an inclined surface of the inclined groove bottom portion has a three-dimensional structure where the groove depth at the inclined surface varies in the widthwise direction thereof and the depth of the inclined surface gradually increases from the starting end, where the groove depth is shallowest, toward the first side main groove to the terminal end, at which the groove depth is deepest and the tip end of the first chamfered portion is in contact with the inclined surface above the bottom of the center main groove,
wherein a side wall, on the center main groove side, of each block of the center land portion has in a developed plan view of the tread pattern an arcuate portion mildly projecting toward the pattern center at a predetermined curvature, said arcuate portion including composite curves in which two or more arcs having different curvatures are smoothly and continuously combined.
In the present invention, "the vicinity of the pattern center" specifically represents a region which covers 33% of the tread width measured from the pattern center as the center. Further, the recitation of "a center main groove in each half-section" defines a case where a pair of center main grooves are provided so as to interpose the pattern center therebetween to form a rib-like land portion continuously extending in the tire circumferential direction on the pattern center, as well as a case where a single center main groove is formed at the pattern center.
Yet further, the term "substantial blocks" is used because in the present invention a section demarcated by the grooves, in which section the steep grooves open to the center main groove at a higher position than the groove bottom position of the center main groove, is also regarded as a block.

In a second aspect of the present invention, the pneumatic tire of the first aspect is characterized in that the chamfer length of the first chamfered portion measured in the tire circumferential direction is shorter than the extending length of the inclined groove bottom portion measured in the same manner as the chamfer length.
In the present invention, the "chamfer length" represents a length along the chamfered surface of the chamfered portion up to the tip end thereof and the "extension length of the inclined groove bottom portion" represents a length along a sloped surface of a slant rising portion.

In a third aspect of the present invention, the pneumatic tire of the first or second aspect is characterized in that the tip end of the first chamfered portion terminates at the same height as the inclined groove bottom portion.

In a fourth aspect of the present invention, the pneumatic tire of any of the first to third aspects is characterized in that side wall portions of respective center land portion blocks, on the center main groove side, have in a developed plan view of the tread pattern arcuate portions mildly projecting toward the pattern center at a predetermined curvature, respectively, along the tire circumferential direction, so that the side walls of the center land portion blocks, on the center main groove side, take on a substantially continuous wavy configuration as a whole.
In the present invention, the "substantially continuous wavy configuration" includes a configuration where the wavy configuration terminates in the vicinity of the opening of each steep groove to the center main groove.

In a fifth aspect of the present invention, the pneumatic tire of the fourth aspect is characterized in that the curvature of the arcuate portion is in the range of 40 to 400 mm.

In a sixth aspect of the present invention, the pneumatic tire of any of the first to fifth aspects is characterized in that a second acute-angle portion interposed between the steep groove and the first side main groove is provided with a second chamfered portion where the height of the land portion gradually decreases toward the tip end of the second chamfered portion.

In a seventh aspect of the present invention, the pneumatic tire of any of the first to sixth aspects is characterized in that a gently slant groove extending from the first side main groove toward the center main groove side is provided in each block.

In an eighth aspect of the present invention, the pneumatic tire of any of the first to seventh aspects is characterized in that the steep groove is provided at an angle in the range of 5 to 50° with respect to the tire circumferential direction.

In a ninth aspect of the present invention, the pneumatic tire of any of the seventh or eighth aspect is characterized in that the gently slant groove is provided at an angle in the range of 45 to 135° with respect to the tire circumferential direction.

In a tenth aspect of the present invention, the pneumatic tire of any of the seventh to ninth aspects is characterized in that a sipe extending substantially in parallel to the gently slant groove is provided in each block.

In an eleventh aspect of the present invention, the pneumatic tire of any of the first to tenth aspects is characterized in that the center main groove is constituted of a pair of center main grooves interposing the pattern center therebetween and that a rib-like land portion is provided between said center main grooves so as to continuously extend along the tire circumferential direction.

### Effect of the Invention

According to the present invention, a tread pattern having a tread portion provided with a center main groove and a slant groove is employed and, in the tread pattern, a steep groove is provided with an inclined groove bottom portion where the groove depth gradually increases from the center main groove toward the first side main groove; a first acute-angle portion interposed by the center main groove and each steep groove is provided with a first chamfered portion where the height of the land portion decreases toward a tip end thereof; and the inclined groove bottom portion and the first chamfered portion are adjacent to each other in the tire width direction, whereby space (volume) as a groove can be retained at the tire surface in the vicinity of the center main groove and drainage properties can be ensured, and relatively high rigidity (bending rigidity) of the land portion against a lateral force can be obtained due to the inclined groove bottom portion and the first chamfered portion being adjacent to and supporting each other inside the groove, thus ensuring good driving stability. As a result, it is possible to provide a pneumatic tire in which drainage properties are improved and noises are reduced, with maintaining good performances in driving stability, resistance to uneven wear and ride comfort at the same time.

### Brief Description of the Drawings

Fig. 1 is a development view of a part of a tread pattern of a pneumatic tire according to the present invention.
Fig. 2(a) is a sectional end view cut along A-A of Fig. 1.
Fig. 2(b) is a sectional end view cut along B-B of Fig. 1.
Fig. 2(c) is a sectional view cut along C-C of Fig. 1.
Fig. 2(d) is a sectional view cut along D-D of Fig. 1.
Fig. 3 is a development view of a part of a tread pattern of a pneumatic tire according to the present invention.
Fig. 4 (a) is a sectional view cut along E-E of Fig. 3.
Fig. 4 (b) is a sectional view cut along F-F of Fig. 3.
Fig. 5(a) (reference), Fig. 5(b) (reference) and Fig. 5(c) are perspective views showing the inclined groove bottom portion.
Fig. 6(a), Fig. 6(b) and Fig. 6(c) are perspective views showing various embodiments of the first chamfered portion according to the present invention.
Fig. 7 is a development view of a part of a tread portion of a Comparative Example tire (Comparative Example 1).

### Explanation of Reference Numerals

- 1: Tread portion
- 2: Tread end
- 3: Center main groove
- 3a, 3b: Wall surface
- 4: Rib-like land portion
- 5: First side main groove
- 6: Center land portion
- 7: Steep groove
- 8: Inclined groove bottom portion
- 9: First chamfered portion
- 8a, 9a: Starting end
- 8b: Inclined surface
- 9b: Chamfered surface
- 8c: Terminal end
- 9c: Tip end
- 10: Second chamfered portion
- 11: Gently slant groove
- 12: Lateral sipe
- 13: Third chamfered portion
- 14: Block
- 15: Block row
- 16: Short sipe
- 17: Gently slant portion
- 18: Circumferential narrow groove
- 20: Arcuate portion
- TW: Tread width
- CL: Pattern center
- C: Tire circumferential direction
- W: Tire width direction

### Best Mode for carrying out the Invention

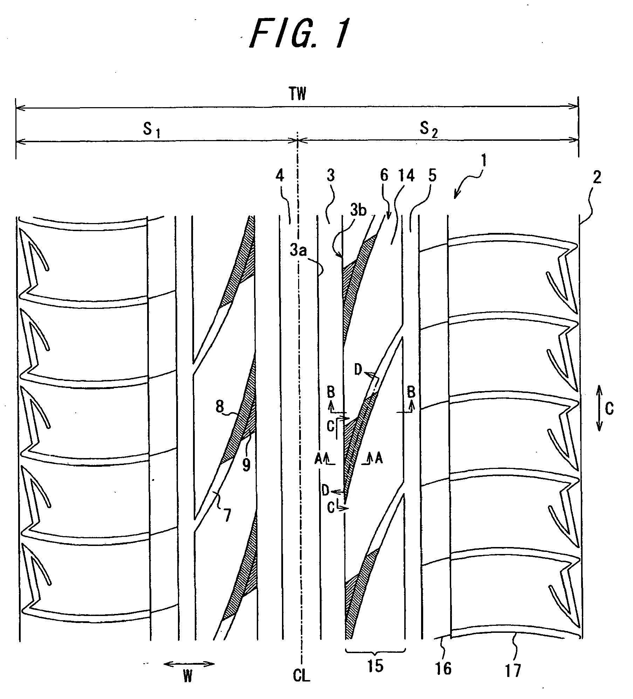

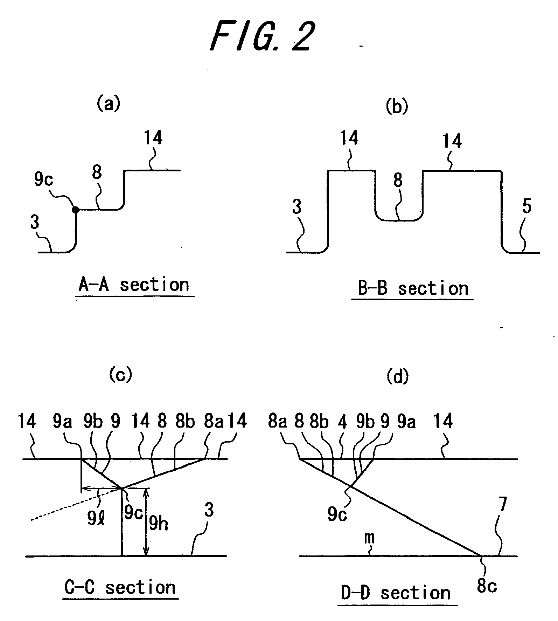

An embodiment of the present invention will be described with reference to the drawings hereinbelow. In Fig. 1 and Fig. 2, the reference number 1 represents a tread portion, 2 represents a tread end, 3 represents a center main groove, 4 represents a rib-like land portion, 5 represents a first side main groove, 6 represents a center land portion, 7 represents a steep groove, 8 represents an inclined groove bottom portion, and 9 represents a first chamfered portion.

A tire having a tread pattern as shown in Fig. 1 is provided with, in each half-section S₁, S₂ thereof obtained by dividing a tread portion 1 into two by the pattern center CL, a center main groove 3 located in the vicinity of the pattern center CL and extending along the tire circumferential direction C; at least one side main groove (a single side main groove 5 in Fig. 1) located between the center main groove 3 and the tread end 2 and extending in the tire circumferential direction C; a plurality of steep grooves 7 located between the center main groove 3 and the side main groove 5 and extending at a relatively small angle with respect to the tire circumferential direction C; and a center land portion 6 defined by the center main groove 3 and the first side main groove 5.
Fig. 1 shows a structure in which the rib-like land portion 4 continuously extending in the tire circumferential direction C is formed between the center main groove 3 and another center main groove 3 of the other half-section. However, provision of the rib-like land portion 4 is optional in the present invention, depending on necessity. Accordingly, it is acceptable that the center main groove 3 extends on the pattern center CL.
Further, plural side main grooves may be provided, according to necessity.

In the tire of the present embodiment, the center main groove 3 and the side main groove 5 extending along the tire circumferential direction C are provided in the tread portion 1, whereby drainage properties in the front-rear direction of a tread contact surface, minimum required in a performance tire, is ensured. Further, the steep groove 7 is provided between the center main groove 3 and the side main groove to extend at a relatively small angle, preferably in the range of 5 to 50°, with respect to the tire circumferential direction C, whereby drainage of water existing within the tread contact surface toward both sides of the tire can be ensured. Yet further, the center land portion 6 is defined by the center main groove 3 and the first side main groove 5 adjacent thereto and each center land portion 6 is demarcated into a number of substantial blocks 14, to form a block row 15, by the center main groove 3, the first side main groove 5 and two steep grooves 7 adjacent in the tire circumferential direction, whereby good driving stability and drainage properties are ensured.

The main structural characteristics of the present invention reside in that: the steep groove 7 is provided with an inclined groove bottom portion 8 where the groove depth gradually increases from the center main groove 3 toward the first side main groove 5; a first acute-angle portion of each block 14, interposed by the center main groove 3 and the steep groove 7, is provided with a first chamfered portion 9 where the height of the land portion gradually decreases toward the tip end thereof; and the inclined groove bottom portion 8 and the first chamfered portion 9 are located adjacent to each other in the tire width direction W.

In the conventional tire, e.g. JP-A 2006-076349, although a steep groove formed in a tread portion is provided with an inclined groove bottom portion where the groove depth gradually increases toward the first side main groove, satisfactory drainage properties cannot be obtained (driving stability is good) because a steep groove is not designed to open to a center main groove. Further, in the conventional tire, e.g. JP-A 09-002025, a first acute-angle portion of each block, interposed by a center main groove and a steep groove, is provided with a first chamfered portion where the height of the land portion gradually decreases toward the tip end thereof, whereby good drainage properties and driving stability are obtained. However, in the tire of JP-A 09-002025, the rigidity of a land portion required for suppressing deformation of a block upon exertion of a lateral force tends to be insufficient because the first chamfered portion is interposed by the center main groove and the steep groove, which are space. In contrast, in the present invention, since the inclined groove bottom portion 8 and the first chamfered portion 9 are adjacent to each other, space (volume) as a groove can be ensured at the tire surface in the vicinity of the center main groove 3 and good drainage properties are ensured and, since the inclined groove bottom portion 8 and the first chamfered portion 9 are adjacent to and support each other within the steep groove 7 against the exertion of a lateral force, relatively high rigidity (bending rigidity) of the land portion is obtained and thus good driving stability can be ensured.

The details of the aforementioned structure will be described below.
In the present invention, the steep groove 7 is provided with the inclined groove bottom portion 8 where the groove depth gradually increases toward the first side main groove 5, whereby adjacent blocks 14 are substantially connected with each other by way of the inclined groove bottom portion 8 along the center main groove 3 and the rigidity of the center land portion 6 as a whole is enhanced, resulting in improved driving stability.

The length in the tire circumferential direction C of the inclined groove bottom portion 8 within the steep groove 7 is, for example, in the range of 10 to 70 mm and the inclined groove bottom portion 8 is preferably provided, for example, in the corresponding hatched areas in Fig. 1.

In a case where the extension length of the inclined groove bottom portion 8 is shorter than 10 mm, an effect of increasing the flow rate of water introduced into the steep groove 7 tends to be weakened. In a case where the extension length of the inclined groove bottom portion 8 exceeds 70 mm, the entire volume of the steep groove 7 is made relatively small, whereby it is difficult to ensure good drainage properties.

Further, in the present invention, the first acute-angle portion of each block 14, interposed by the center main groove 3 and the steep groove 7, is provided with a first chamfered portion 9 where the height of the land portion gradually decreases toward the tip end 9C thereof such that the rigidity of the tip end 9C portion is increased, whereby crashing of the tip end 9c portion and thus running-off deformation thereof into the groove when the first acute-angle portion is brought into contact with the ground is prevented, the drainage properties are improved and smooth contact with the ground is ensured to reduce noises.

The length in the tire circumferential direction C of the first chamfered portion 9 is, for example, in the range of 2 to 15 mm and the first chamfered portion 9 is preferably provided, for example, in the corresponding hatched areas in Fig. 1.

In a case where the chamfer length of the first chamfered portion 9, measured from the tip end 9c, is shorter than 2 mm, the first acute-angle portion tends not to have sufficient rigidity. In a case where the chamfer length of the first chamfered portion 9, measured from the tip end 9c, exceeds 15 mm, the ground-contact area of the first acute-angle portion decreases, whereby driving stability tends to deteriorate.

In the present invention, in addition to the provision of the inclined groove bottom portion 8 and the first chamfered portion 9, the inclined groove bottom portion 8 and the first chamfered portion 9 are located adjacent to each other in the tire width direction W.

According to the aforementioned structure, providing the inclined groove bottom portion 8 and the first chamfered portion 9, for example, in the tread center region such that these two portions are adjacent to each other in the tire widthwise direction W allows space of a relatively large volume to be formed as a groove at the tire surface, thereby improving drainage properties. Further, since the inclined groove bottom portion 8 and the first chamfered portion 9 inside the steep groove 7 are adjacent to and support each other, bending rigidity against a lateral force, in particular, is enhanced and the rigidity of the center land portion 6 is further enhanced, whereby the driving stability is improved.

In the present invention, as exemplified in Fig. 2(d), the inclined groove bottom portion 8 has: a starting end 8a in the vicinity of the center main groove 3, at which end the groove depth is shallowest; an inclined surface 8b where the groove depth gradually and linearly increases from the starting end 8a toward the first side main groove 5; and the terminal end 8c at which the groove depth is deepest.
The first chamfered portion 9 has: a starting end 9a at which the height of the land portion of the block 14 of the center land portion 6 is highest; a chamfered surface 9b where the height of the land portion gradually and lineally decreases from the starting end 9a toward the starting end 8a side of the inclined groove bottom portion 8; and a tip end 9c at which the height of the land portion is lowest.

In the first chamfered portion 9, the tip end 9c is preferably positioned, as shown in Fig. 2(c), such that the chamfer length 91 in the tire circumferential direction C is in the range of 2 to 15 mm and the tip end 9c is in contact with the inclined surface 8b of the inclined groove bottom portion 8.

In a case in which the chamfer length is shorter than 2 mm, the tip end 9c portion tends not to have sufficient rigidity. In a case in which the chamfer length exceeds 15 mm, the ground-contact area of the first acute-angle portion decreases, whereby driving stability tends to deteriorate.

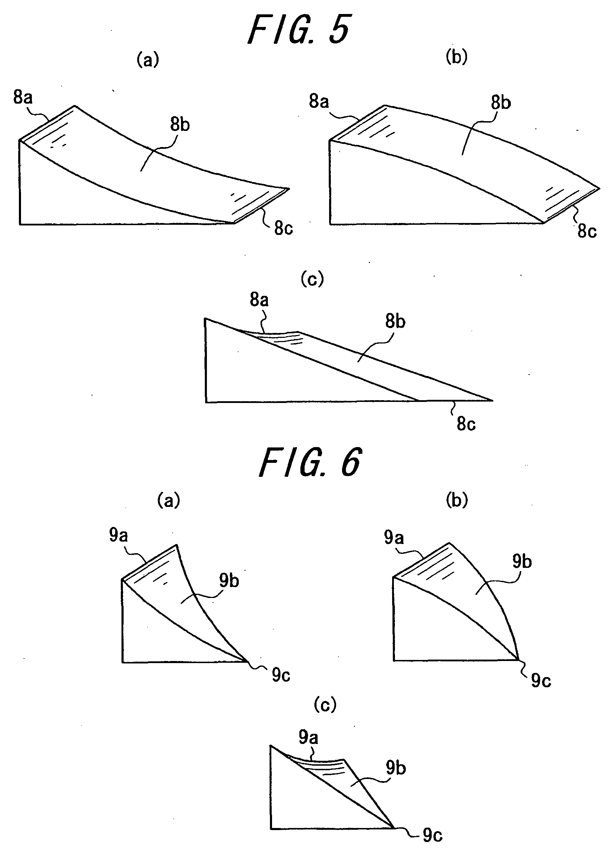

The first chamfered portion 9 is processed in a manner that the portion is removed from the tire surface. Therefore, increasing the chamfer length too long results in a decrease in the surface area of the tread ground-contact surface, which may deteriorate the ground-contact properties of the tire and thus the driving stability. Regarding the standard chamfer length of the first chamfered portion 9, the chamfer length of the first chamfered portion 9 is preferably shorter than the extension length of the inclined groove bottom portion 8. In this regard, reducing the extension length of the inclined groove bottom portion 8 too much results in a decrease in the portion of the inclined groove bottom portion 8 adjacent to the first chamfered portion 9 and thus deterioration in an effect of supporting the first chamfered portion 9. It is further preferable that the ratio of the chamfer length of the first chamfered portion 9 to the extension length of the inclined groove bottom portion 8 is in the range of 1: 1 to 1: 10. For example, in Fig. 5 and Fig. 6, if the extension length of the inclined groove bottom portion 8 exceeds ten times as long as the chamfer length of the first chamfered portion 9, the groove volume may be insufficient and drainage properties may not be ensured in a satisfactory manner.

The tip end 9c of the first chamfered portion 9 is preferably positioned at the same height as the inclined groove bottom portion 8, so that drain water is reliably introduced into the steep groove 7 without disturbing the water flow in the grooves and thus good drainage properties can be ensured.

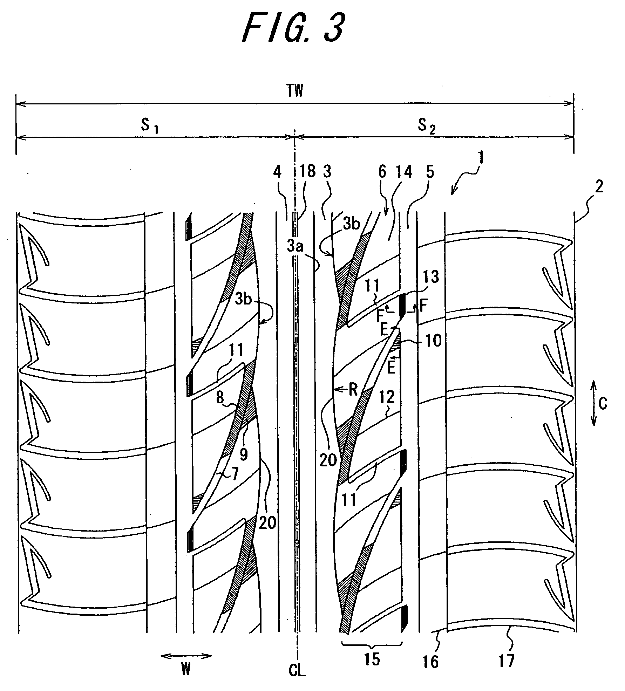

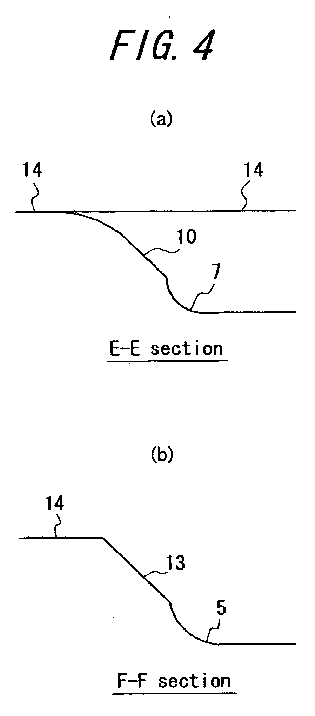

Fig. 3 is a view of a tread pattern showing another embodiment of the present invention. Fig. 4(a) is a sectional view cut along the E-E line of Fig. 3 and Fig. 4(b) is a sectional view cut along the F-F line of Fig. 3.

In the present embodiment, a side wall 3b, on the center main groove side, of each block 14 of the center land portion 6, interposed by the center main groove 3, the first side main groove 5 and the two steep grooves 7 adjacent to each other in the tire circumferential direction C of the tread portion 1, has in a developed plan view of the tread pattern an arcuate portion 20 mildly projecting toward the pattern center CL at a predetermined curvature R, preferably in the range of 40 to 400 mm in the tire circumferential direction C. In the present invention, the shape of the arcuate portion 20 is composite curves in which two or more arcs having different curvatures are smoothly and continuously combined.

Since the side wall 3b portion of the block 14, on the center main groove side, has the arcuate portion 20, a flow of water within the ground-contact surface is smoothly introduced from the center main groove 3 into the steep groove 7 by the arcuate portion 20 of the side wall 3b on the center main groove side, whereby the flow of water is facilitated and drainage properties can be improved.

Further, since the side wall 3b on the center main groove side, of the center land portion 6, has a continuous wavy configuration as a whole, water inside the center main groove 3 in the ground contacting region of the tire can be drained at a high pressure in the front-rear direction of the tire and the water flow can be branched from the center main groove 3 to the steep groove 7 smoothly, whereby the drainage properties can be remarkably improved. Further, since the groove width of the center main groove 3 changes continuously, the flow-induced resonant noise can also be reduced.

In a case where the curvature R of the arcuate portion 20 is smaller than 40 mm, the groove volume of the center main groove 3 is too small, causing deterioration of drainage properties. In a case where the curvature R of the arcuate portion 20 exceeds 400 mm, the arcuate portion 20 becomes a substantially linear groove wall surface 3b, which hardly contributes to improving drainage properties. Accordingly, the curvature is preferably in the range of 40 to 400 mm.

Further, the block 14 defined by the center main groove 3, two steep grooves 7 and the first side main groove 5 is provided with a gently slant groove 11 extending from the first side main groove 5 toward the center main groove 3 side. The angle at which the gently slant groove 11 extends with respect to the tire circumferential direction C is preferably in the range of 45 to 135°. Since the gently slant groove 11 is slanted at a gentler angle than the steep groove 7, the rigidity of the block can be adjusted by the gently slant groove 11 so that the ground contact properties of each block 14 is improved and generation of uneven wear such as "heal-toe" wear can be suppressed. It is possible to improve driving stability and resistance to uneven wear under sufficient block rigidity.

In the example shown in Fig. 3, the gently slant groove 11 terminates within the block 14, so that the gently slant groove 11 provided in such a manner within the block 14 which block is relatively long in the tire circumferential direction C effects adjustment of rigidity of the land portion and ensures good driving stability and the like. Provision of the gently slant grove 11 is optional.

A second acute-angle portion of the block 14, interposed by the steep groove 7 and the first side main groove 5, is preferably provided, as shown in Fig. 4(a), with a second chamfered portion 10 where the height of the land portion gradually decreases toward the tip end thereof.
By providing the second chamfered portion 10 as described above, the rigidity of the center land portion 6 can be enhanced without marring the drainage properties of the first side main groove 5, whereby the driving stability can be further improved.

The steep groove 7 preferably extends at an angle in the range of 5 to 50° with respect to the tire circumferential direction C, as described above. By appropriately setting the angle of the steep groove 7 with respect to the tire circumferential direction C, drainage properties can be effectively improved.

In a case where the above-described angle is smaller than 5°, the rigidity of the tip end 9c tends to be insufficient. In a case where the above-described angle is larger than 50°, drainage properties may not be sufficient.

The gently slant groove 11 preferably extends at an angle in the range of 45 to 135° with respect to the tire circumferential direction C. By appropriately setting the angle of the gently slant groove 11 with respect to the tire circumferential direction C, the block 14 has sufficient rigidity of the land portion against a force in the tire widthwise direction W, whereby driving stability and resistance to uneven wear can be improved.

In the present embodiment, in terms of making the steep groove 7 and the gently slant groove 11 demonstrate the superior effects thereof with good balance therebetween, difference in the angle with respect to the tire circumferential direction C between the steep groove 7 and the gently slant groove 11 is preferably no smaller than 10°.

The block 14 is preferably provided with sipes 12 extending substantially in parallel to the gently slant groove 11. By providing the block 14 with the sipes 12 extending at the substantially the same angle with respect to the circumferential direction C as the gently slant groove 11 such that difference in shape and area between the blocks due to provision of the sipes 12 is made relatively smaller, the rigidity of the block 14 at the divided portions thereof can be optimized and resistance to uneven wear can be enhanced, and further the edge components are increased so that the wet-brake performance and riding comfort are improved.

Further, the steep groove 7 preferably has a shape in which the angle at which the steep groove 7 extends with respect to the tire circumferential direction C gradually increases from the center main groove 3 side toward the first side main groove 5 side. Since the steep groove 7 has such an extending shape as described above, the water flow within the ground-contact surface of the tread corresponds to the flow line of the steep groove 7 and the groove can effectively drain water toward both sides of the tire, whereby good drainage properties can be ensured.

Regarding the shape of the steep groove 7, for example, in the region covering approximately 5 to 10% of the tread width TW from the pattern center CL, the steep groove 7 is preferably inclined at an angle of 5 to 30° with respect to the tire circumferential direction C so that the shape of the steep groove 7 corresponds to the water flow within the ground-contact surface of the tread.
In Fig. 1 and Fig. 3, there are shown a short sipe 16 extending from the steep groove 7 in the tire widthwise direction W across the first side main groove 5 and a gently slant portion 17 extending continuous with the short sipe 16 at an angle in the range of 70 to 90° with respect to the tire circumferential direction C, with curving with respect to the tire circumferential direction C, to open the tread end 2. However, it is acceptable that the gently slant portion 17 replaces the sipe 16 to open by itself to the first side main groove 5.

Further, in order to increase rigidity of the block 14 in the vicinity of the position where the steep groove 7 opens to the first side main groove 5 to improve the driving stability, as shown in Fig. 3, a wall surface 3b of each block, adjacent to the opening position of the steep groove 7 to the first side main groove 5, is preferably provided with a third chamfered portion 13 projecting toward the first side main groove 5, in which portion the height of the block gradually decreases toward the groove bottom of the first side main groove 5.

The inclined surface 8b has a three-dimensional structure where the groove depth at the inclined surface varies in the widthwise direction thereof as shown in Fig. 5(c). The inclined surface 8b may have other various shapes such as a concave surface as shown in Fig. 5(a), a convex surface as shown in Fig. 5(b)

The first chamfered portion 9 may have a flat inclined surface as the chamfered surface 9b. The first chamfered surface 9b may have other various shapes such as a concave surface as shown in Fig. 6(a), a convex surface as shown in Fig. 6(b) and a three-dimensional structure where the height of the land portion at the chamfered surface varies in the widthwise direction thereof, as shown in Fig. 6(c).
The second chamfered portion 10 and the third chamfered portion 13 may also have various shapes in a manner similar to the first chamfered portion 9. Regarding the first chamfered portion 9 and the second chamfered portion 10, a convex surface as shown in Fig. 6(b) is particularly preferable because a convex surface can form a part of ground-contact surface of a tire tread. By using a convex surface in the chamfered portion, there is obtained an effect of reducing striking noises when the chamfered portion hits the ground surface, as well as an effect of improving drainage properties. Regarding the third chamfered portion 13, a flat inclined surface or a concave surface is preferable because such a surface can ensure sufficient groove volume, with enhancing rigidity of the root portion of the block at the same time.

Further, Fig. 3 shows an example where the circumferential narrow groove 18 extending in the tire circumferential direction C is provided at the pattern center CL side of the rib-like land portion 4 in order to improve roadability in straight-running and suppress uneven wear at the tire center portion.

In Fig. 1 and Fig. 3, the tread pattern structured as described above is point-symmetrical with respect to the pattern center CL. However, in the present invention, the tread pattern may be a directional tread pattern where the tread pattern is bilateral-symmetrical with respect to the pattern center CL.

In a case where a pair of center main grooves 3 are provided to interpose the pattern center CL therebetween, these center main grooves 3 preferably extend continuously along the tire circumferential direction C. By providing the rib-like land portion 4 on the pattern center CL, the feel of handle grip during driving and stability in straight running are enhanced, further improving the driving stability.

In Fig. 1 and Fig. 3, the steep groove 7 and the gently slant groove 11 are provided alternately. By alternately providing slant grooves having different inclination angles with respect to the tire circumferential direction, reliably obtaining sufficient rigidity of the land portion can be made compatible with improving drainage properties. Further, alternate provision of slant grooves having different inclination angles contributes to reducing pattern noises by an effect of dispersing frequencies of pattern noises.

The foregoing descriptions present mere examples of representative embodiments of the present invention and various changes can be made thereto in the claims described below. For example, although Fig. 1 shows an example where only one side main grove (the first side main groove 5) is provided as the side main groove, two or more side main grooves maybe provided.

### Examples

Next, a tire according to the present invention was produced for tests and the performances thereof were evaluated, as described below.
The tire of Example 1 (reference) had the tread pattern as shown in Fig. 3, the inclined groove bottom portion 8 including a flat inclined surface, and the first chamfered portion as shown in Fig. 6(b) and the tire size thereof was 195/65R15 (the tread width TW is 150 mm). The details such as dimensions of the center main groove, the side main groove, the steep groove, the gently slant groove, the rib-like land portion, the block and the like are summarized in Tables 1 to 4.
The tire structures other than the tread portion, of the Example 1 tire, were substantially the same as those of the conventional pneumatic tire for a passenger vehicle because in the present invention the tire structures other than the tread portion need no changes. The curvature R of each of the arcuate portions constituting the side wall, on the center main groove side, of the land portion is 165 mm (the average).

**Table 1**

| | Groove depth (mm) | Groove width (mm) | Angle with respect to the circumferential direction (°) |
|---|---|---|---|
| Center main groove | 8.3 | 8.5 (average) | 0 |
| First side main groove | 8.3 | 6.5 | 0 |
| Steep groove | 7 | 3 - 3.5 | 10-25 |
| Gently steep groove | 7 | 2 | 60 |
| Sipe | 4 | 0.7 | 60 |
| Short sipe | 4 | 0.7 | 75 |
| Gently slant portion | 7 (tire widthwise inner side) - 1.5 (tire widthwise outer side) | 3 | 78 (tire widthwise inner side) - 90 (tire widthwise outer side) |
| Circumferential narrow groove | 2.0 | 1.0 | 0 |

**Table 2**

| | Height of land portion (mm) | Width of land portion (mm) |
|---|---|---|
| Rib-like land portion | 8.3 | 15 |
| Block | 8.3 | 26 |

**Table 3**

| | Groove depth (mm) | Extension length (mm) | Width (mm) |
|---|---|---|---|
| Inclined groove bottom portion | 7 | 38 | 3 - 3.5 |

**Table 4**

| | Height of land portion (mm) | Chamfer length (mm) |
|---|---|---|
| First chamfered portion | 9h = 3 | 91 = 9 |
| Second chamfered portion | 3 | 7 |
| Third chamfered portion | 8.3 | 2 |

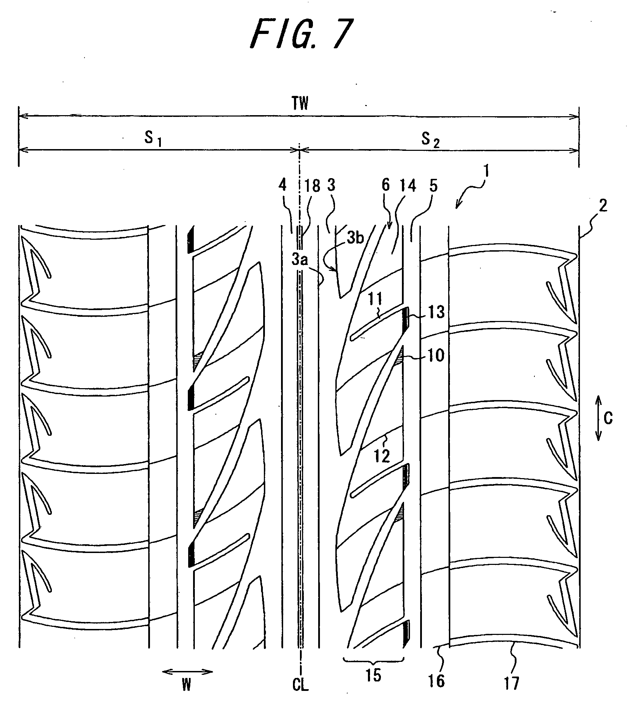

The tire of Comparative Example 1 has the tread pattern as shown in Fig. 7 and, specifically, has a structure similar to that of the Example 1 tire, except that the inclined groove bottom portion and the first chamfered portion are not provided. The tire of Comparative Example 2 has a structure similar to that of the Example 1 tire, except that the inclined groove bottom portion is not provided. The tire of Comparative Example 3 has a structure similar to that of the Example 1 tire, except that the first chamfered portion is not provided.

### (Test methods)

Each of the test tires described above was mounted to a test vehicle and each of the following tests was carried out under the condition of: the tire air pressure being 230 kPa (gauge pressure); and the tire load corresponding to two passengers aboard.

### 1. Drainage properties in running straight

The vehicle was driven to run straight on a wet road surface covered with water of 5 mm depth. The limit speed when the hydroplaning phenomenon occurred was measured and evaluated.

### 2. Driving stability in a dry condition

The vehicle was driven on a circuit course in a dry condition in various running modes of sport-running. The driving stability was evaluated by the feelings felt by the test driver.

### 3. Driving stability in a wet condition

The vehicle was driven on a circuit course in a wet condition in various running modes of sport-running. The driving stability was evaluated by the feelings felt by the test driver.

### 4. Pattern noise

The vehicle was driven on a flat and smooth road surface in a dry condition in various running modes. The driving stability was evaluated by the feelings felt by the test driver.

### 5. Resistance to uneven wear

The vehicle was driven on a public road in a dry condition in various running modes. Resistance to uneven wear was evaluated by heal-toe wear between adjacent blocks observed after running 5000 km.

The evaluation results of these tests are shown in Table 5.
Each of the numerical values of the evaluation results in Table 5 is expressed as an index value ratio when the corresponding evaluation result of Comparative Example 1 is expressed as 100. The larger values represent the better results.

**[Table 5]**

| | Example 1 | Comparative Example 1 | Comparative Example 2 | Comparative Example 3 |
|---|---|---|---|---|
| Drainage properties in straight running | 102 | 100 | 100 | 101 |
| Driving stability in dry condition | 105 | 100 | 102 | 103 |
| Driving stability in wet condition | 107 | 100 | 102 | 104 |
| Pattern noise | 105 | 100 | 104 | 100 |
| Resistance to uneven wear | 103 | 100 | 100 | 100 |

From the results of Table 5, it is understood that the Example 1 tire was excellent in drainage properties in straight running, driving stability in dry condition, driving stability in wet condition, pattern noise suppression and resistance to the uneven wear, as compared with the tires of Comparative Examples 1 to 3.

### Industrial Applicability

According to the present invention, it is possible to provide a pneumatic tire employing a tread pattern having a tread portion provided with a center main groove and a slant groove, characterized in that in the tread pattern the shape of each block in a center land portion is optimized so that drainage properties are improved and noises are reduced with maintaining good performances in driving stability, resistance to uneven wear, ride comfort and the like at the same time.

## Claims

1. A pneumatic tire having in each half-section (S₁, S₂) obtained by dividing a tread portion (i) into two by the pattern center (CL): a center main groove (3) located at the pattern center or in the vicinity thereof and extending along the tire circumferential direction (C); at least one side main groove (5) located between the center main groove (3) and the tread end (2) and extending in the tire circumferential direction; and a plurality of steep grooves (7) located between the center main groove (3) and the side main groove (5) and extending at a relatively small angle with respect to the tire circumferential direction, wherein a center land portion (6) is defined by the center main groove (3) and a first side main groove (5) as the side main groove adjacent to the center main groove (3), and the center land portion (6) is demarcated into a number of substantial blocks (14) by the center main groove (3), the first side main groove (5) and two steep grooves (7) adjacent in the tire circumferential direction to form a block row (15);
the steep groove (7) is provided with an inclined groove bottom portion (8) where the groove depth gradually increases from the center main groove (3) toward the first side main groove (5);
a first acute-angle portion interposed by the center main groove and each steep groove is provided with a first chamfered portion (9) where the height of the land portion gradually decreases toward a tip end (9c) thereof; and
the inclined groove bottom portion (8) and the first chamfered portion (9) are located adjacent to each other in the tire width direction (W), and **characterized in that** an inclined surface (8b) of the inclined groove bottom portion (8) has a three-dimensional structure where the groove depth at the inclined surface (8b) varies in the widthwise direction thereof and the depth of the inclined surface (8b) gradually increases from the starting end (8a), where the groove depth is shallowest, toward the first side main groove (5) to the terminal end (8c), at which the groove depth is deepest and the tip end (9c) of the first chamfered portion (9) is in contact with the inclined surface (8b) above the bottom of the center main groove (3),
wherein a side wall (3b), on the center main groove (3) side, of each block (14) of the center land portion (6) has in a developed plan view of the tread pattern an arcuate portion (20) mildly projecting toward the pattern center (CL) at a predetermined curvature (R), said arcuate portion including composite curves in which two or more arcs having different curvatures are smoothly and continuously combined.

2. The pneumatic tire of claim 1, **characterized in that** the chamfer length of the first chamfered portion (9) measured in the tire circumferential direction is shorter than the extending length of the inclined groove bottom portion (8) measured in the same manner as the chamfer length.

3. The pneumatic tire of claim 1 or 2, **characterized in that** the tip end (9c) of the first chamfered portion (9) terminates at the same height as the inclined groove bottom portion (8).

4. The pneumatic tire of any of claims 1 to 3, **characterized in that** side wall (3b) portions of respective center land portion blocks, on the center main groove side, have in a developed plan view of the tread pattern arcuate portions (20) mildly projecting toward the pattern center at a predetermined curvature (R), respectively, along the tire circumferential direction, so that the side walls of the center land portion blocks, on the center main groove side, take on a substantially continuous wavy configuration as a whole.

5. The pneumatic tire of claim 4, **characterized in that** the curvature of the arcuate portion is in the range of 40 to 400 mm.

6. The pneumatic tire of any of claims 1 to 5, **characterized in that** a second acute-angle portion interposed between the steep groove (7) and the first side main groove (5) is provided with a second chamfered portion (10) where the height of the land portion gradually decreases toward the tip end of the second chamfered portion.

7. The pneumatic tire of any of claims 1 to 6, **characterized in that** a gently slant groove (11) extending from the first side main groove (5) toward the center main groove side is provided in each block (14).

8. The pneumatic tire of any of claims 1 to 7, **characterized in that** the steep groove (7) is provided at an angle in the range of 5 to 50° with respect to the tire circumferential direction.

9. The pneumatic tire of claim 7 or 8, **characterized in that** the gently slant groove (11) is provided at an angle in the range of 45 to 135° with respect to the tire circumferential direction.

10. The pneumatic tire of any of claims 7 to 9, **characterized in that** a sipe (12) extending substantially in parallel to the gently slant groove (11) is provided in each block (14).

11. The pneumatic tire of any of claims 1 to 10, **characterized in that** the center main groove (3) is constituted of a pair of center main grooves interposing the pattern center therebetween and that a rib-like land portion (14) is provided between said center main grooves so as to continuously extend along the tire circumferential direction.

12. The pneumatic tire of claim 1, wherein the arcuate portion (20) mildly projects toward the pattern center (CL) at a predetermined curvature (R) in the range of 40 to 400 mm.

13. The pneumatic tire of claim 1, wherein the center main groove (3) is the widest groove among the main grooves extending in the circumferential direction.

14. The pneumatic tire of claim 1, wherein a wall surface (3b) of each block, adjacent to the opening position of the steep groove (7) to the first side main groove (5), is provided with a third chamfered portion (13) projecting toward the first side main groove (5), in which portion the height of the block gradually decreases toward the groove bottom of the first side main groove (5).

15. The pneumatic tire of claim 1, wherein tread structures of the respective half-sections are point-symmetrical around a point on the pattern center.

## Patentansprüche

1. Luftreifen, der in jeder Halbsektion (S₁, S₂), die durch das Teilen eines Laufflächenabschnitts (i) in zwei durch die Profilmitte (CL) erlangt wird, Folgendes aufweist: eine Mittelhauptrille (3), die an der Profilmitte oder in der Nähe derselben angeordnet ist und sich entlang der Reifenumfangsrichtung (C) erstreckt, wenigstens eine Seitenhauptrille (5), die zwischen der Mittelhauptrille (3) und dem Laufflächenende (2) angeordnet ist und sich in der Reifenumfangsrichtung erstreckt, und mehrere steile Rillen (7), die zwischen der Mittelhauptrille (3) und der Seitenhauptrille (5) angeordnet sind und sich in einem verhältnismäßig kleinen Winkel in Bezug auf die Reifenumfangsrichtung erstrecken, wobei ein Mittelstollenabschnitt (6) durch die Mittelhauptrille (3) und eine erste Seitenhauptrille (5) als die an die Mittelhauptrille (3) angrenzende Seitenhauptrille definiert wird und der Mittelstollenabschnitt (6) durch die Mittelhauptrille (3), die Seitenhauptrille (5) und zwei in der Reifenumfangsrichtung angrenzende steile Rillen (7) in eine Anzahl von beträchtlichen Blöcken (14) abgegrenzt, um eine Blockreihe (15) zu bilden,
wobei die steile Rille (7) mit einem geneigten Rillensohlenabschnitt (8) versehen ist, wo die Rillentiefe allmählich von der Mittelhauptrille (3) zu der Seitenhauptrille (5) hin zunimmt,
wobei ein erster spitzwinkliger Abschnitt, der durch die Mittelhauptrille und jede steile Rille eingefügt ist, mit einem ersten abgeschrägten Abschnitt (9) versehen ist, wo die Höhe des Stollenabschnitts allmählich zu einem Spitzenende (9a) desselben hin abnimmt, und
wobei der geneigte Rillensohlenabschnitt (8) und der erste abgeschrägte Abschnitt (9) in der Reifenbreitenrichtung (W) aneinandergrenzend angeordnet sind, und **dadurch gekennzeichnet, dass** eine geneigte Oberfläche (8b) des geneigten Rillensohlenabschnitts (8) eine dreidimensionale Struktur aufweist, wo sich die Rillentiefe an der geneigten Oberfläche (8b) in der Breitenrichtung derselben verändert und die Tiefe der geneigten Oberfläche (8b) allmählich von dem vorderen Ende (8a), wo die Rillentiefe am flachsten ist, zu der ersten Seitenhauptrille (5) hin bis zu dem hinteren Ende (8c), wo die Rillentiefe am tiefsten ist und das Spitzenende (9c) des ersten abgeschrägten Abschnitts (9) oberhalb der Sohle der Mittelhauptrille (3) in Berührung mit der geneigten Oberfläche (8b) steht, zunimmt,
wobei eine Seitenwand (3b), auf der Seite der Mittelhauptrille (3), jedes Blocks (14) des Mittelstollenabschnitts (6) in einer abgewickelten Draufsicht des Laufflächenprofils einen bogenförmigen Abschnitt (20) aufweist, der mit einer vorbestimmten Krümmung (R) sanft zur Profilmitte (CL) hin vorspringt, wobei der bogenförmige Abschnitt zusammengesetzte Kurven einschließt, in denen zwei oder mehr Bögen, die unterschiedliche Krümmungen aufweisen, glatt und durchgehend kombiniert sind.

2. Luftreifen nach Anspruch 1, **dadurch gekennzeichnet, dass** die Abschrägungslänge des ersten abgeschrägten Abschnitts (9), gemessen in der Reifenumfangsrichtung, kürzer ist als die Ausdehnungslänge des geneigten Rillensohlenabschnitts (8), gemessen auf die gleiche Weise wie die Abschrägungslänge.

3. Luftreifen nach Anspruch 1 oder 2, **dadurch gekennzeichnet, dass** das Spitzenende (9c) des ersten abgeschrägten Abschnitts (9) bei der gleichen Höhe endet wie der geneigte Rillensohlenabschnitt (8).

4. Luftreifen nach einem der Ansprüche 1 bis 3, **dadurch gekennzeichnet, dass** Seitenwand- (3b) abschnitte jeweiliger Mittelstollenabschnittsblöcke, auf der Seite der Mittelhauptrille, in einer abgewickelten Draufsicht des Laufflächenprofils bogenförmige Abschnitte (20) aufweisen, die jeweils entlang der Reifenumfangsrichtung mit einer vorbestimmten Krümmung (R) sanft zur Profilmitte hin vorspringen, so dass die Seitenwände der Mittelstollenabschnittsblöcke, auf der Seite der Mittelhauptrille, als Ganzes eine im Wesentlichen durchgehende wellige Konfiguration annehmen.

5. Luftreifen nach Anspruch 4, **dadurch gekennzeichnet, dass** die Krümmung des bogenförmigen Abschnitts in dem Bereich von 40 bis 400 mm liegt.

6. Luftreifen nach einem der Ansprüche 1 bis 5, **dadurch gekennzeichnet, dass** ein zweiter zwischen die steile Rille (7) und die erste Seitenhauptrille (5) eingefügter spitzwinkliger Abschnitt mit einem zweiten abgeschrägten Abschnitt (10) versehen ist, wo die Höhe des Stollenabschnitts allmählich zu einem Spitzenende des zweiten abgeschrägten Abschnitts hin abnimmt.

7. Luftreifen nach einem der Ansprüche 1 bis 6, **dadurch gekennzeichnet, dass** eine leicht schräge Rille (11), die sich von der ersten Seitenhauptrille (5) zu der Seite der Mittelhauptrille hin erstreckt, in jedem Block (14) bereitgestellt wird.

8. Luftreifen nach einem der Ansprüche 1 bis 7, **dadurch gekennzeichnet, dass** die steile Rille (7) in einem Winkel in dem Bereich von 5 bis 50° in Bezug auf die Reifenumfangsrichtung bereitgestellt wird.

9. Luftreifen nach Anspruch 7 oder 8, **dadurch gekennzeichnet, dass** die leicht schräge Rille (11) in einem Winkel in dem Bereich von 45 bis 135° in Bezug auf die Reifenumfangsrichtung bereitgestellt wird.

10. Luftreifen nach einem der Ansprüche 7 bis 9, **dadurch gekennzeichnet, dass** eine Lamelle (12), die sich im Wesentlichen parallel zu der leicht schrägen Rille (11) erstreckt, in jedem Block (14) bereitgestellt wird.

11. Luftreifen nach einem der Ansprüche 1 bis 10, **dadurch gekennzeichnet, dass** die Mittelhauptrille (3) aus einem Paar von Mittelhauptrillen besteht, welche die Profilmitte zwischen sich einfügen, und dass ein stegartiger Stollenabschnitt (14) so zwischen den Mittelhauptrillen bereitgestellt wird, dass er sich durchgehend entlang der Reifenumfangsrichtung erstreckt.

12. Luftreifen nach Anspruch 1, wobei der bogenförmige Abschnitt (20) mit einer vorbestimmten Krümmung (R) in dem Bereich von 40 bis 400 mm sanft zur Profilmitte (CL) hin vorspringt.

13. Luftreifen nach Anspruch 1, wobei die Mittelhauptrille (3) die breiteste Rille unter den Hauptrillen, die sich in der Reifenumfangsrichtung erstrecken, ist.

14. Luftreifen nach Anspruch 1, wobei eine Wandfläche (3b) jedes Blocks, angrenzend an die Öffnungsposition der steilen Rille (7) zu der ersten Seitenhauptrille (5), mit einem dritten abgeschrägten Abschnitt (13), der zu der ersten Seitenhauptrille (5) hin vorspringt, versehen ist, wobei in diesem Abschnitt die Höhe des Blocks allmählich zu der Rillensohle der Seitenhauptrille (5) hin abnimmt.

15. Luftreifen nach Anspruch 1, wobei Laufflächenstrukturen der jeweiligen Halbsektionen punktsymmetrisch um einen Punkt auf der Profilmitte sind.

## Revendications

1. Bandage pneumatique, comportant dans chaque demi-section (S₁, S₂), établie en divisant une partie de bande de roulement (i) en deux par le centre de la sculpture (CL) : une rainure principale centrale (3), agencée au niveau du centre de la sculpture ou au voisinage de celui-ci, et s'étendant le long de la direction circonférentielle du bandage pneumatique (C) ; au moins une rainure principale latérale (5), agencée entre la rainure principale centrale (3) et l'extrémité de la bande de roulement (2), et s'étendant dans la direction circonférentielle du bandage pneumatique ; et plusieurs rainures fortement inclinées (7) agencées entre la rainure principale centrale (3) et la rainure principale latérale (5) et s'étendant à un angle relativement réduit par rapport à la direction circonférentielle du bandage pneumatique, dans lequel une partie d'appui centrale (6) est définie par la rainure principale centrale (3) et une première rainure principale latérale (5) comme la rainure principale latérale adjacente à la rainure principale centrale (3), la partie d'appui centrale (6) étant divisée en plusieurs pavés substantiels (14) par la rainure principale centrale (3), la première rainure principale latérale (5) et deux rainures fortement inclinées (7) adjacentes dans la direction circonférentielle pour former une rangée de pavés (15) ;
la rainure fortement inclinée (7) comportant un fond de rainure incliné (8), au niveau duquel la profondeur de rainure est progressivement réduite de la rainure principale centrale (3) vers la première rainure principale latérale (5) ;
une première partie à angle aigu étant agencée entre la rainure principale centrale et chaque rainure fortement inclinée et comportant une première partie chanfreinée (9), au niveau de laquelle la hauteur de la partie d'appui est progressivement réduite vers son extrémité de pointe (9c) ;
le fond de rainure incliné (8) et la première partie chanfreinée (9) étant agencés de manière adjacente l'un à l'autre dans la direction de la largeur du bandage pneumatique (W), et **caractérisé en ce qu'**une surface inclinée (8b) du fond de rainure incliné (8) a une structure tridimensionnelle, la profondeur de la rainure au niveau de la surface inclinée (8b) changeant dans la direction de sa largeur et la profondeur de la surface inclinée (8b) étant progressivement accrue de l'extrémité de début (8a), au niveau de laquelle la profondeur de la rainure est la plus réduite, vers la première rainure principale latérale (5), vers l'extrémité terminale (8c), au niveau de laquelle la profondeur de rainure est maximale, et l'extrémité de pointe (9c) de la première partie chanfreinée (9) étant en contact avec la surface inclinée (8b) au-dessus du fond de la rainure principale centrale (3) ;
dans lequel une paroi latérale (3b), sur le côté de la rainure principale centrale (3), de chaque pavé (14) de la partie d'appui centrale (6) comporte, dans une vue en plan développée de la sculpture de bande de roulement, une partie arquée (20) débordant légèrement vers le centre de la sculpture (CL), avec une courbure prédéterminée (R), ladite partie arquée englobant des courbes composites, deux ou plusieurs arcs ayant des courbures différentes étant combinées de manière lisse et continue.

2. Bandage pneumatique selon la revendication 1, **caractérisé en ce que** la longueur du chanfrein de la première partie chanfreinée (9), mesurée dans la direction circonférentielle du bandage pneumatique, est inférieure à la longueur d'extension de la partie de fond de rainure inclinée (8), mesurée de manière identique à la longueur du chanfrein.

3. Bandage pneumatique selon les revendications 1 ou 2, **caractérisé en ce que** l'extrémité de pointe (9c) de la première partie chanfreinée (9) se termine au niveau de la même hauteur que la partie de fond de rainure inclinée (8).

4. Bandage pneumatique selon l'une quelconque des revendications 1 à 3, **caractérisé en ce que** des parties de paroi latérale (3b) des pavés respectifs de la partie d'appui centrale, sur le côté de la rainure principale centrale, comportent, dans une vue en plan développée de la sculpture de la bande de roulement, des parties arquées (20), débordant respectivement légèrement vers le centre de la sculpture, avec une courbure prédéterminée (R), le long de la direction circonférentielle du bandage pneumatique, de sorte que les parois latérales des pavés de la partie d'appui centrale, sur le côté de la rainure principale centrale, adoptent une configuration ondulée sensiblement continue en tant qu'ensemble

5. Bandage pneumatique selon la revendication 4, **caractérisé en ce que** la courbure de la partie arquée est comprise dans l'intervalle allant de 40 à 400 mm.

6. Bandage pneumatique selon l'une quelconque des revendications 1 à 5, **caractérisé en ce qu'**une deuxième partie à angle aigu, interposée entre la rainure rotonde (7) et la première rainure latérale principale (5), comporte une deuxième partie chanfreinée (10), au niveau de laquelle la hauteur de la partie d'appui est progressivement réduite vers l'extrémité de pointe de la deuxième partie chanfreinée.

7. Bandage pneumatique selon l'une quelconque des revendications 1 à 6, **caractérisé en ce qu'**une rainure légèrement inclinée (11), s'étendant de la première rainure principale latérale (5) vers le côté de la rainure principale centrale, est agencée dans chaque pavé (14).

8. Bandage pneumatique selon l'une quelconque des revendications 1 à 7, **caractérisé en ce que** la rainure fortement inclinée (7) est agencée à un angle compris dans l'intervalle allant de 5 à 50° par rapport à la direction circonférentielle du bandage pneumatique.

9. Bandage pneumatique selon les revendications 7 ou 8, **caractérisé en ce que** la rainure légèrement inclinée (11) est agencée à un angle compris dans l'intervalle allant de 45 à 135° par rapport à la direction circonférentielle du bandage pneumatique.

10. Bandage pneumatique selon l'une quelconque des revendications 7 à 9, **caractérisé en ce qu'**une lamelle (12) s'étendant de manière sensiblement parallèle à la rainure légèrement inclinée (11) est agencée dans chaque pavé (14).

11. Bandage pneumatique selon l'une quelconque des revendications 1 à 10, **caractérisé en ce que** la rainure principale centrale (3) est constituée par une paire de rainures principales centrales, le centre de la sculpture étant agencé entre elles, et **en ce qu'**une partie d'appui en forme de nervure (14) est agencée entre lesdites rainures principales centrales, de sorte à s'étendre en continu le long de la direction circonférentielle du bandage pneumatique.

12. Bandage pneumatique selon la revendication 1, dans lequel la partie arquée (20) déborde légèrement vers le centre de la sculpture (CL), avec une courbure prédéterminée (R), comprise dans l'intervalle allant de 40 à 400 mm.

13. Bandage pneumatique selon la revendication 1, dans lequel la rainure principale centrale (3) est la rainure la plus large parmi les rainures principales s'étendant dans la direction circonférentielle.

14. Bandage pneumatique selon la revendication 1, dans lequel une surface de paroi (3b) de chaque pavé, adjacente à la position d'ouverture de la rainure profonde (7) vers la première rainure principale (5), comporte une troisième partie chanfreinée (13) débordant vers la première rainure principale latérale (3), la hauteur du pavé étant progressivement réduite vers le fond de rainure de la première rainure principale (5) dans cette partie.

15. Bandage pneumatique selon la revendication 1, dans lequel des structures de bande de roulement des demi-sections respectives présentent une symétrie ponctuelle autour d'un point sur le centre de la sculpture.
